**Europäisches Patentamt**

**European Patent Office**

**Office européen des brevets**

(19)

(11) Numéro de publication : **0 293 281 B1**

(12) **FASCICULE DE BREVET EUROPEEN**

(45) Date de publication du fascicule du brevet :
**25.09.91 Bulletin 91/39**

(51) Int. Cl.⁵ : $B23P\ 19/06$, $G21C\ 13/06$

(21) Numéro de dépôt : **88401128.9**

(22) Date de dépôt : **09.05.88**

(54) **Dispositif de vissage et de dévissage de goujons ou boulons de grandes dimensions.**

(30) Priorité : **27.05.87 FR 8707511**

(43) Date de publication de la demande :
**30.11.88 Bulletin 88/48**

(45) Mention de la délivrance du brevet :
**25.09.91 Bulletin 91/39**

(84) Etats contractants désignés :
**BE CH DE ES GB IT LI NL SE**

(56) Documents cités :
**EP-A- 0 003 326**
**EP-A- 0 009 973**
**EP-A- 0 220 983**
**DE-A- 3 318 941**
**DE-A- 3 521 016**
**DE-B- 2 640 991**
**FR-A- 1 005 272**

(56) Documents cités :
**FR-A- 2 095 231**
**FR-A- 2 274 997**
**FR-A- 2 349 400**
**US-A- 4 011 809**
**US-A- 4 047 456**

(73) Titulaire : **FRAMATOME**
**Tour Fiat 1, Place de la Coupole**
**F-92400 Courbevoie (FR)**

(72) Inventeur : **Sevelinge, Gérard**
**9 bis rue Saint Gengaux**
**F-71300 Montceau les Mines (FR)**
Inventeur : **Bourdonne, Jean-Claude**
**9 Résidence de Morambeau**
**F-71670 Le Breuil (FR)**

(74) Mandataire : **Lanceplaine, Jean-Claude et al**
**CABINET LAVOIX 2, Place d'Estienne d'Orves**
**F-75441 Paris Cédex 09 (FR)**

Jouve, 18, rue Saint-Denis, 75001 PARIS

## Description

La présente invention a pour objet un dispositif de vissage et de dévissage de goujons ou boulons de grandes dimensions, par exemple pour la fixation du couvercle d'une cuve.

On sait que, par exemple, dans les réacteurs nucléaires, le couvercle est fixé de manière amovible sur la cuve afin de permettre le rechargement périodique en combustible du réacteur et, à la faveur de celui-ci, une inspection de l'intérieur de la cuve et des éléments situés à l'intérieur de ladite cuve.

A cet effet, le couvercle est fixé sur la cuve du réacteur par des goujons qui sont vissés dans la collerette de la cuve et qui pénètrent dans des trous lisses prévus dans la collerette du couvercle. Ces goujons sont généralement employés en assez grand nombre et relativement rapprochés les uns des autres, si bien que le démontage et le remontage du couvercle nécessitent le dévissage et le vissage de tous ces goujons en plus de leur mise en tension.

Ces opérations de vissage ou de dévissage des goujons sont aléatoires et délicates. En effet, chaque goujon pèse plusieurs centaines de kilogrammes, de sorte que, lors du vissage du goujon dans le filetage ou lors de son dévissage, on doit vaincre des résistances de frottement qui apparaissent dans le filetage et qui sont d'autant plus élevées que le goujon est plus lourd. De plus, les axes des différents éléments de l'appareil de vissage ne concordent pas toujours après fonctionnement avec les axes des trous taraudés de la cuve ou avec les axes des goujons. Par conséquent, il arrive fréquemment que la coaxialité du goujon ne puisse se faire automatiquement au moment de son introduction dans le trou taraudé de la cuve et cette opération doit donc être effectuée manuellement de même que les premiers tours de vissage du goujon. Il en résulte que le personnel, durant ce travail, risque de séjourner pendant une période excessivement longue dans une zone de rayonnement radio-actif trop élevé.

Ces défauts d'alignements, qui peuvent également provoquer des coincements du goujon pendant son vissage dans le taraudage d'implantation de la cuve, entraînent sur les pièces à mouvements des contraintes irrégulièrement réparties autour de leur axe de translation ou de rotation qui peuvent provoquer par frottement une usure irrégulière et prématurée ainsi que la formation de cheveux d'ange, c'est-à-dire de longs copeaux de section réduite formés à partir du métal du taraudage, plus tendre que celui du goujon, par frottement trop élevé dudit goujon sur le taraudage d'implantation.

On connait dans le EP-A-0220983, un dispositif de recherche de la position optima de vissage de goujons de grandes dimensions, notamment pour la fixation d'un couvercle d'une cuve qui comporte :

— des moyens d'orientation du goujon selon une trajectoire appropriée,

— un système de compensation de poids asservi relié auxdits moyens par une liaison articulée,

— un système de vissage réversible et à vitesse variable,

— un limiteur de couple réglé à un couple de déclenchement correspondant au couple maximum de vissage,

— un organe de préhension du goujon permettant d'exercer sur ledit goujon un couple d'entrainement dans les deux sens et un effort axial,

— et un automate programmable de pilotage de l'ensemble du dispositif.

Le but de la présente invention est de proposer un dispositif de vissage et de dévissage de goujons de grandes dimensions qui évite le grippage de goujon dans le taraudage d'implantation et réduisant corrélativement les temps d'intervention de vissage et de dévissage.

Dans ce but, le dispositif de vissage et de dévissage comportant :

— un système de recherche de la position optima de vissage du goujon et d'orientation dudit goujon selon une trajectoire appropriée,

— un système de compensation de poids du goujon piloté par un organe oléo-hydraulique par asservissement électro-hydraulique en force à partir d'une mesure précise de la pression hydraulique détectée au niveau de l'organe oléo-hydraulique représentant l'effort de compensation à exercer par ledit organe oléo-hydraulique,

— un mécanisme d'entrainement en rotation à vitesse réglable et dans les deux sens du goujon,

— un organe de préhension du goujon permettant d'exercer sur ledit goujon un effort axial,

— et un automate programmable de pilotage du dispositif.

L'organe oléo-hydraulique comprend, d'une part, un carter sur lequel agit le système de recherche de la position optima de vissage et, d'autre part, un vérin limitant la pression de contact du goujon dans le taraudage correspondant, et comportant une tige creuse qui se déplace dans ledit carter et dans laquelle sont intégrés le mécanisme d'entrainement en rotation du goujon et l'organe de préhension dudit goujon ladite tige creuse comportant sur sa périphérie un piston ménageant avec le carter deux chambres et dont les déplacements sont asservis notamment à la différence de pression régnant dans les chambres et détectés par des capteurs différentiels disposés dans chacune desdites chambres ou par un seul capteur de pression différentielle.

Selon une autre caractéristique de l'invention, le mécanisme d'entraînement en rotation à vitesse réglable est commandé par un moto-variateur à courant de Foucault permettant le glissement et l'arrêt de l'entrainement en rotation dudit goujon au-dessus d'un seuil de couple de vissage déterminé.

Afin de bien faire comprendre l'invention, on va maintenant décrire, en se référant aux figures jointes en annexe, un mode de réalisation du dispositif suivant l'invention.

   — La Fig. 1 est une vue schématique en plan montrant l'installation du dispositif de vissage et dévissage conforme à l'invention ;

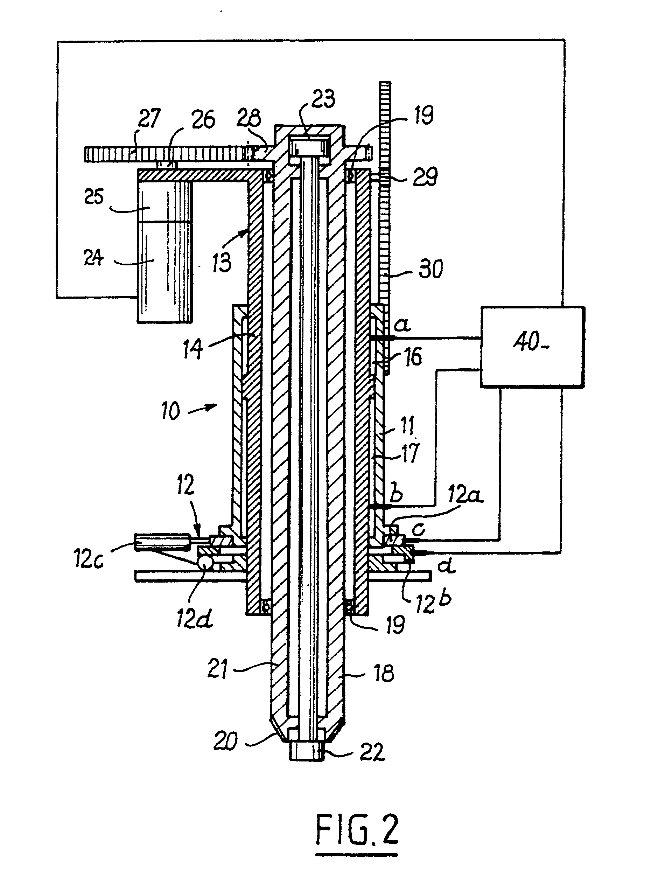

   — La Fig. 2 est une vue en coupe transversale et à plus grande échelle du système de compensation de poids du goujon intégré dans le dispositif de vissage et dévissage ;

   — La Fig. 3 est une vue schématique de la boucle d'asservissement du système de compensation de poids du goujon ; et

   — La Fig. 4 est une vue schématique d'une variante de la boucle d'asservissement.

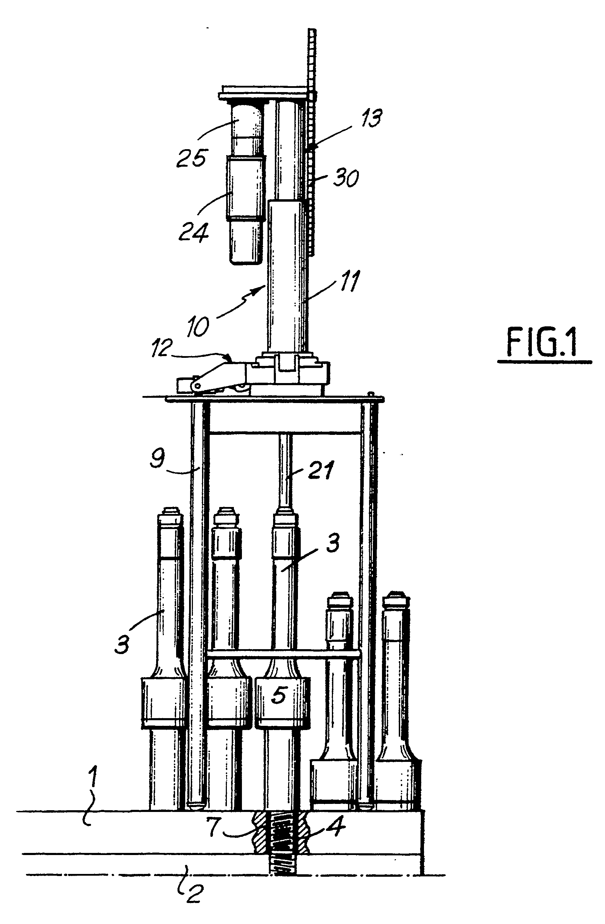

Le dispositif de vissage et dévissage conforme à l'invention, tel qu'il est représenté à la Fig. 1, est utilisé pour ouvrir ou fermer un couvercle 1 d'une cuve 2, par exemple d'un réacteur nucléaire.

Comme cela est bien connu, le couvercle 1 et la cuve 2 ont une forme de révolution autour d'un axe géométrique vertical. Le couvercle 1 est fixé de manière détachable sur la cuve 2 au moyen de plusieurs goujons 3 d'axe vertical, qui sont régulièrement répartis à la périphérie du couvercle 1 et de la cuve 2.

Chaque goujon 3 passe à travers un trou lisse 7 prévu verticalement dans le bord périphérique du couvercle 1 et est muni, à sa partie inférieure, d'un filetage 4 destiné à être vissé dans un trou taraudé 8 du bord périphérique de la cuve et à sa partie médiane un second filetage sur lequel est vissé un écrou de cuve 5. D'autre part, le goujon 3 comporte, à sa partie supérieure, des gorges circulaires ou des filets à profil approprié permettant sa mise en tension et un évidement interne, non représenté, pour l'introduction d'un organe de préhension et de mise en rotation par le dispositif de vissage et dévissage.

Ce dispositif de vissage-dévissage, désigné dans son ensemble par la référence 10, est supporté par l'intermédiaire d'un châssis 9 qui repose et se déplace sur le couvercle 1.

Le dispositif de vissage-dévissage 10 se compose d'un carter 11 relié à sa partie inférieure à un système 12 de recherche de la position optima de vissage du goujon 3 et d'orientation dudit goujon selon une trajectoire appropriée.

Ce système 12 de recherche de la position optima de vissage décrit dans la demande de brevet français n° 8516061 au nom de la Demanderesse, comporte un ensemble de deux tables à mouvements orthogonaux 12a et 12b commandées par des vérins respectivement 12c et 12d, dont le fonctionnement est asservi à la mesure du couple de vissage et des conditions de vissage du goujon. Ces tables décrivent divers types de trajectoires, par exemple spirales d'Archimède ou aplaties, rectangulaires ou carrées et permettent le vissage du goujon en effectuant une recherche cumulée de la position optima de vissage de façon à éviter que des contraintes se produisent sur les pièces en mouvement.

Ce carter 11, par exemple de forme cylindrique, constitue le corps d'un vérin 13 de compensation de poids du goujon 3.

Le vérin 13 est constitué par une tige de vérin creuse 14 de diamètre extérieur légèrement inférieur au diamètre intérieur du carter 11 et qui comporte, sur sa périphérie et à l'intérieur du carter 11, un renflement 15 formant un piston muni d'organes d'étanchéité et ménageant à l'intérieur du carter 11 deux chambres 16 et 17.

La tige 14 du vérin 13 de compensation de poids du goujon 3 a une course suffisante, à l'intérieur du carter 11, pour couvrir toute la course de vissage de chaque goujon, ce qui permet à ce vérin de servir également pour les déplacements axiaux d'approche ou d'extraction de chaque goujon.

Dans la tige 14 du vérin 13 est disposé un arbre creux 18 d'entraînement en rotation du goujon 3. Cet arbre creux 18 débouche de chaque côté de la tige 14 et suit les déplacements verticaux de ladite tige 14, mais est libre en rotation à l'intérieur de ladite tige. Le guidage en rotation de l'arbre 18 est par exemple assuré à chacune des extrémités de la tige 14 par des roulements 19.

L'arbre 18 comporte à son extrémité inférieure des cannelures 20 venant s'engager dans l'évidement prévu à la partie supérieure du goujon pour l'entraînement en rotation de celui-ci.

Par ailleurs, une broche 21 de supportage du goujon est intégrée dans l'arbre 18. Cette broche 21 est munie à sa partie inférieure d'un dispositif de préhension 22 du goujon, par exemple à verrouillage à billes commandé par un petit vérin hydraulique 23 disposé dans l'arbre 18 d'entraînement en rotation dudit goujon.

Le système d'entraînement en rotation de l'arbre 18 fixé à la partie supérieure de la tige 14 du vérin 13 est assuré par un moto-variateur 24 à courant de Foucault attaquant un réducteur 25 dont l'arbre de sortie 26 commande une roue dentée 27 engrénant avec un pignon 28 monté à la partie supérieure de l'arbre 18.

La mesure de l'altitude de la tige 14 du vérin 13 de compensation de poids est réalisée par un codeur, non représenté, détectant le déplacement d'un petit pignon 29 qui se déplace en même temps que ladite tige 14 sur une crémaillère 30.

D'autre part, le dispositif comporte différents organes de mesure, notamment des organes de mesure de pression par capteurs a et b disposés sur le vérin 13 de compensation de poids, de capteurs c et d de déplacement du type potentiométrique du système 12 de recherche de la position optima de vissage pour le pilotage de celui-ci, et également des organes de mesure en continu des paramètres de vissage tel que la mesure du couple et la mesure de la vitesse de vissage ou de dévissage.

Le vérin 13 forme donc un organe oléo-hydraulique de compensation de poids par asservissement électro-hydraulique en force à partir d'une mesure précise de l'effort ou de la différence de pression détectée par les capteurs a et b dans les chambres 16 et 17, ceci afin de limiter la pression de contact goujon-taraudage, donc le couple de vissage.

Le vérin 13 de compensation de poids permet le mouvement du goujon 3 suivant un axe vertical et est également chargé d'assurer la compensation partielle ou intégrale dudit goujon 3.

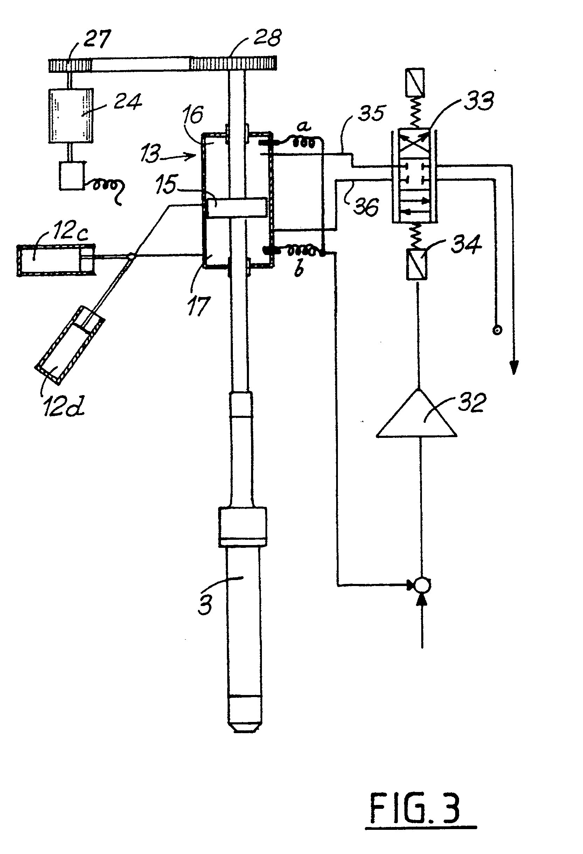

A cet effet, ce vérin 13 est inséré dans une boucle d'asservissement électro-hydraulique en force représentée à la Fig.3.

Cette boucle d'asservissement comprend, outre le vérin 13, les capteurs de pression a et b, reliés à un amplificateur 32 qui commande une électrovalve 33 par l'intermédiaire d'une bobine 34. Cette électrovalve 33 alimente les chambres 16 et 17 du vérin 13 par des conduites respectivement 35 et 36.

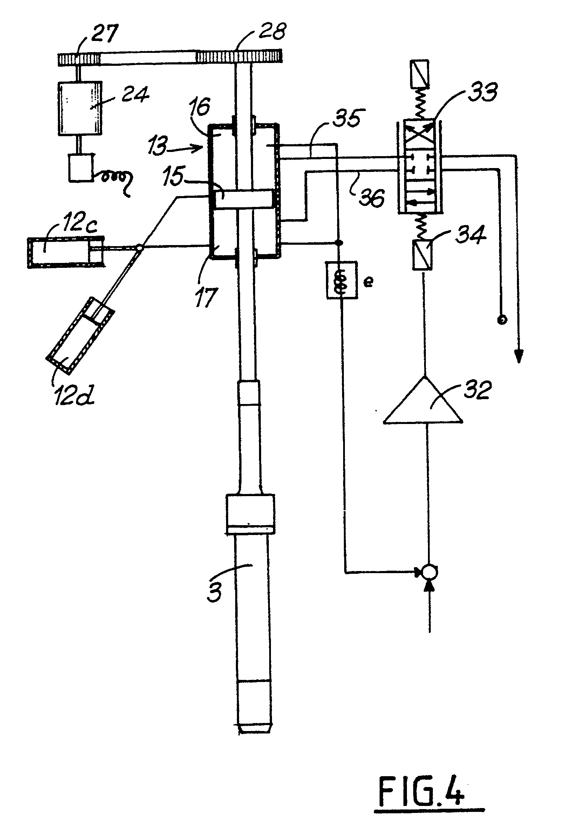

Selon la variante représentée à la Fig. 4, les capteurs de pression a et b sont remplacés par un seul capteur de pression différentielle e.

L'ensemble du dispositif est associé à un automate programmable 40 ou une électronique appropriée ou un calculateur servant principalement :

— à piloter l'asservissement électro-hydraulique du vérin 13 de compensation de poids,

— à enchaîner les différentes phases de vissage, c'est-à-dire la descente du vérin de compensation, le verrouillage du goujon, la rotation à gauche et à droite, la recherche de la position optima de vissage, la fin de course basse, la remontée du vérin de compensation ou des différentes phases de dévissage,

— à sélectionner les différentes vitesses de rotation du goujon suivant la phase de vissage considérée,

— à comparer le couple de vissage à une consigne affichée de seuil de couple, cela pour une vitesse de rotation donnée,

— à commander le mouvement des tables 12a et 12b suivant le type de trajectoire choisi, lorsque le couple de vissage atteint un certain pourcentage du seuil du couple à ne pas dépasser.

Le fonctionnement du dispositif ainsi décrit est le suivant :

Tout d'abord, au cours d'une phase préparatoire, on met en position le dispositif de vissage-dévissage 10 au-dessus du goujon 3 à visser, on vérifie la verticalité du dispositif, on branche les différents raccordements électriques hydrauliques, et on vérifie la mise à zéro du système 12 de recherche de la position optima de vissage.

Ensuite, on procède à la phase d'accostage et de verrouillage du goujon sur le dispositif de vissage.

A cet effet, l'automate programmable 40 commande la descente de la tige 14 du vérin 13 qui entraîne l'arbre 18 et la broche 21, pour l'accostage du goujon 3 par l'arbre 18 et l'engagement des cannelures 20 d'entraînement en rotation. Le petit vérin 23, sous l'action de l'automate 40, assure le verrouillage du système de préhension 22 sur le goujon 3 avec contrôle de la position du verrou, par exemple par contact de proximité.

Ensuite, l'automate 40 commande la mise en charge du vérin 13 avec vérification de la charge initiale, c'est-à-dire le poids Po du goujon 3 équipé et commandé par le vérin piloté 13 la descente dudit goujon 3.

La valeur des pressions dans les chambres 16 et 17 du vérin 13 est mesurée et donnée par les capteurs a et b, ou le capteur de pression différentielle e. Ainsi, on mesure l'écart de pression entre les deux chambres 16 et 17. Cet écart de pression est converti en signal électrique, transmis par les capteurs a et b ou le capteur e, comparé à un signal de consigne X correspondant à la valeur du poids que l'on veut compenser.

L'automate programmable 40 effectue donc la comparaison des signaux, consigne X et le signal kp donné par les capteurs a et b ou le capteur e. Si ces deux signaux sont différents, c'est cet automate programmable qui en effectue la différence : $\Sigma = X - kp$, et qui va amplifier ce signal d'erreur $\Sigma$ pour piloter et alimenter le vérin 13 afin d'amener la pression dans les chambres 16 et 17 à des valeurs telles que l'écart de pression entre ces deux dernières corresponde à un effort résiduel égal au poids du goujon 3 que l'on veut compenser. Selon le signe du signal d'erreur $\Sigma$, la bobine 34 de l'électrovalve 33 est alimentée permettant ainsi l'ouverture de l'électrovalve dans le sens recherché et par voie de conséquence, l'alimentation de la chambre désirée du vérin 13.

Dès le début du contact du goujon 3 dans le chambrage du taraudage d'implantation de la cuve, pour ne pas faire supporter le poids Po au premier filet du taraudage, le poids du goujon est compensé par exemple à 90% par le vérin 13.

Le dispositif est prêt pour le début de la phase de vissage.

L'automate 40 commande la mise en route du moto-variateur 24 en rotation en sens inverse sur un tour maximum pour l'engagement des filets du goujon 3 dans le taraudage d'implantation. Le codeur mesurant le déplacement du petit pignon 29 sur la crémaillère 30 détecte alors un déplacement négatif, lorsque le goujon chute de la valeur d'un pas, il y a discrimination de changement de signe du déplacement, ce qui provoque l'arrêt en rotation inverse.

Pendant cette phase, la compensation de poids du goujon 3 par le vérin 13 reste opérationnelle pour éviter le choc sur le premier filet du taraudage. Ensuite, l'automate 40 commande, par l'intermédiaire du moto-variateur 24, du réducteur 25 qui entraîne la roue dentée 27, le pignon 28 et l'arbre cannelé 18, le début de vissage sur deux à trois tours si possible et à vitesse lente.

Si au cours du vissage, le couple augmente, sans atteindre le patinage du moto-variateur 24, on compare celui-ci à un seuil d'enclenchement de mise en route du système des tables 12a et 12b afin d'accomplir une trajectoire de recherche de la position optima de vissage, tout en continuant à visser. Ce couple d'enclenchement est donc réglé à une valeur légèrement inférieur au couple de patinage.

Pour l'arrêt des tables 12a et 12b, le couple de déclenchement du mouvement desdites tables est réglé à une valeur légèrement inférieur au couple d'enclenchement.

Dès que le couple de vissage redescend au-dessous du couple de déclenchement, le moto-variateur 24 cesse de patiner, ce qui provoque la remise en rotation du goujon.

Le vissage se poursuit donc sur deux à trois tours à vitesse lente, puis on passe en vitesse rapide avec la compensation de poids par le vérin par exemple à 95%.

Si un nouveau coincement se produit, l'automate 40 commande une nouvelle recherche de la position optima de vissage par le système 12. Après décoincement, le vissage se poursuit à vitesse rapide jusqu'au prochain coincement et ainsi de suite.

La fin de vissage est détectée par la course du vérin 13 de compensation de poids, c'est-à-dire par le déplacement du petit pignon 24 sur la crémaillère 30, en corrélation avec le déplacement de la consigne de couple par le patinage du moto-variateur 24.

Dès la fin de vissage détectée, l'automate 40 commande par le petit vérin 23 le déverrouillage de la broche 21 du goujon 3 et la remontée du vérin 13 de compensation de poids entraînant l'arbre cannelé 18 et la broche 21.

Le dévissage d'un goujon s'effectue en réalisant les mêmes opérations de la phase préparatoire, c'est-à-dire en positionnant le dispositif de vissage-dévissage 10 au-dessus du goujon 3 à dévisser, en vérifiant la verticalité du dispositif et en branchant les différents raccordements électriques et hydrauliques.

La phase d'accostage de l'arbre d'entraînement 18 et de déverrouillage de la broche 21 sur le goujon, s'effectue de la même manière que pour le vissage, mais la compensation de poids sur le vérin 13 est réglée négativement à 105% du poids du goujon, avec traction vers le haut, provoquant ainsi le contact de la partie supérieure du filet du goujon sur le taraudage d'implantation.

Ensuite, l'automate 40 commande le dévissage du goujon par l'intermédiaire de l'arbre cannelé 18 entraîné par le moto-variateur 24 et l'arrêt du dévissage s'effectue lorsque l'extrémité inférieure du goujon est dégagée du chambrage en tête du taraudage d'une centaine de millimètres.

D'une manière générale, la vitesse du dispositif de vissage est réglable par paliers de 5 à 50 tours/mn et la compensation de poids par le vérin 13 est réglable de 0 à 200% du poids du goujon. Par ailleurs, le départ de vissage est réalisé après vérification de la mise à la verticale du goujon, la liaison entre l'arbre cannelé et le goujon ainsi que la broche de verrouillage autorisant un débattement angulaire de 1 à 2°.

On voit que les avantages du dispositif suivant l'invention sont de permettre le vissage de goujons de grandes dimensions dans leur taraudage d'implantation, dans des conditions optima de contact, à savoir un couple minimum de vissage, une pression filet du goujon sur filet du taraudage contrôlée en valeur dans une fourchette serrée de dispersion, et un contrôle de la coaxialité des axes goujon-taraudage. Ces conditions réunies évitent la formation de fins copeaux par frottement trop élevé du goujon sur le taraudage, le grippage du goujon dans le taraudage et réduisent corrélativement les temps d'intervention de vissage et de dévissage.

Enfin, le dispositif suivant l'invention s'applique non seulement aux centrales nucléaires comportant un réacteur à eau sous pression, mais à d'autres secteurs de l'industrie nucléaire, aux installations pétrolières et pétrochimiques, aux installations minières, ou encore pour la fermeture de turbines, vannes hydrauliques, conduites sous pression ou corps de vanne. De façon générale, le dispositif suivant l'invention s'applique dans le cadre de nombreuses installations industrielles mettant en oeuvre des éléments de vissage de grandes dimensions.

## Revendications

1. Dispositif de vissage et de dévissage de goujons (3) ou de boulons de grandes dimensions, notamment pour la fixation d'un couvercle (1) d'une cuve (2) munie de taraudages d'implantation, ledit dispositif comportant :

— un système (12) de recherche de la position optima de vissage du goujon (3) et d'orientation dudit goujon selon une trajectoire appropriée.

— un système (13) de compensation de poids du goujon piloté par un organe oléo-hydraulique (14, 15, 16, 17) par asservissement électro-hydraulique en force à partir d'une mesure précise de la pression hydraulique détectée au niveau de l'organe oléo-hydraulique représentant l'effort de compensation à exercer par ledit organe oléo-hydraulique,

— un mécanisme d'entraînement (18, 24, 25) en rotation à vitesse réglable dans les deux sens du goujon (3),

— un organe de préhension (21, 22) du goujon (3) permettant d'exercer sur ledit goujon un effort axial,
— et un automate programmable (40) de pilotage du dispositif, caractérisé en ce que l'organe oléohydraulique comprend, d'une part, un carter (11) sur lequel agit le système (12) de recherche de la position optima de vissage et, d'autre part, un vérin (13) limitant la pression de contact du goujon (3) dans le taraudage correspondant, et comportant une tige creuse (14) qui se déplace dans ledit carter et dans laquelle sont intégrés le mécanisme d'entrainement (18, 24, 25) en rotation du goujon (3) et l'organe de préhension (21, 22) dudit goujon (3), ladite tige creuse (14) comportant sur sa périphérie un piston (15) ménageant avec le carter (11) deux chambres (16, 17), et dont les déplacements sont asservis notamment à la différence de pression régnant dans les chambres (16, 17) et détectés par des capteurs différentiels (a, b) disposés dans chacune desdites chambres ou par un seul capteur de pression différentielle (e).

2. Dispositif selon la revendication 1, caractérisé en ce que le mécanisme d'entrainement en rotation à vitesse réglable du goujon (3) est commandé par un moto-variateur (24) à courant de Foucault permettant le glissement et l'arrêt de l'entraînement en rotation dudit goujon (3) au-dessus d'un seuil de couple de vissage déterminé.

3. Dispositif selon la revendication 1, caractérisé en ce que le mécanisme d'entraînement en rotation du goujon est constitué par un arbre creux (18) intégré dans la tige (14), se déplaçant axialement en même temps que ladite tige et entraîné en rotation par le moto-variateur (24) par l'intermédiaire d'un réducteur (25) et d'une roue dentée (27) engrénant avec un pignon (28) solidaire dudit arbre creux.

4. Dispositif selon la revendication 1, caractérisé en ce que l'organe de préhension du goujon (3) est constitué par une broche (21) intégrée dans l'arbre (18) du mécanisme d'entrainement en rotation dudit goujon et se déplaçant axialement en même temps que ledit arbre (18) et que la tige (14) du vérin (13).

**Patentansprüche**

1. Vorrichtung zum Ein- und Ausschrauben von Schraubenbolzen (3) oder von Bolzen von großer Abmessung, insbesondere für die Befestigung eines Deckels (1) eines Behälters (2), versehen mit Einsetzgewinden, wobei die Vorrichtung aufweist :
ein System (12) des Auffindens der optimalen Position des Schraubens des Schraubenbolzens (3) und der Ausrichtung des Schraubenbolzens gemäß einer geeigneten Bahn,
ein System (13) der Gewichtskompensation des Schraubenbolzens, geführt durch ein Öl-hydraulisches Organ (14, 15, 16, 17) durch elektrohydraulische Betätigung mittels Kraft, ausgehend von einer exakten Messung des hydraulischen Druckes erfaßt auf der Höhe des Öl-hydraulischen Organs, das die Kompensationskraft darstellt, die durch das Öl-hydraulische Organ auszuüben ist,
einen Drehantriebsmechanismus (18, 24, 25) mit einstellbarer Geschwindigkeit in beide Richtungen des Schraubenbolzens (3),
ein Aufnahmeorgan (21, 22) des Schraubenbolzens (3), das erlaubt, auf den schraubenbolzen eine Axialkraft aufzubringen,
und einen programmierbaren Automaten (40) zum Führen der Vorrichtung, **dadurch gekennzeichnet,** daß das Öl-hydraulische Organ einerseits ein Gehäuse (11) aufweist, auf dem das Auffindungssystem (12) der optimalen Position des Schraubens agiert und andererseits einen Stelltrieb (13) aufweist, der den Berührungsdruck des Schraubenbolzens (3) in dem entsprechenden Gewinde begrenzt, und eine hohle Stange (14) aufweist, die sich in dem Gehäuse bewegt, und in der der Drehantriebsmechanismus (18, 24, 25) des Schraubenbolzens (3) und das Aufnahmeorgan (21, 22) des Schraubenbolzens (3) integriert sind, wobei die hohle Stange (14) an ihrer Peripherie einen Kolben (15) aufweist, der mit dem Gehäuse (11) zwei Kammern (16, 17) ausbildet, und von dem die Bewegungen insbesondere der Druckdifferenz unterliegen, die in den beiden Kammern (16, 17) herrscht und erfaßt wird durch Differenzaufnehmer (a, b), die in jeder der Kammern angeordnet sind oder von einem einzigen Differenzdruckaufnehmer (e).

2. Vorrichtung nach Anspruch 1, **dadurch gekennzeichnet,** daß der Drehantriebsmechanismus mit einstellbarer Geschwindigkeit des Schraubenbolzens (3) gesteuert wird durch einen Drehzahlveränderer (24) mittels Foucault-Strom, der das Gleiten und das Anhalten des Drehantriebs des Schraubenbolzens (3) oberhalb einer vorbestimmten Anzugsmomentschwelle erlaubt.

3. Vorrichtung nach Anspruch 1, **dadurch gekennzeichnet,** daß der Drehantriebsmechanismus des Schraubenbolzens durch eine hohle Welle (18) gebildet wird, die in der Stange (14) integriert ist, der sich axial zur gleichen Zeit wie die Stange bewegt und durch den Drehzahlveränderer (24) mittels eines Eruptionsgetriebes (25) und eines Zahnrads (27) angetrieben wird, das mit einem Rüssel (28) in Eingriff steht, das mit der hohlen Welle verbunden ist.

4. Vorrichtung nach Anspruch 1, **dadurch gekennzeichnet,** daß das Aufnahmeorgan des Schraubenbolzens (3) durch eine Hülse (21) gebildet wird, die in die Welle (18) des Drehantriebsmechanismus des Schraubenbolzens integriert ist und sich in axialer Richtung zur gleichen Zeit bewegt, wie die Welle (18) und die Stange (14) des Stelltriebs (13).

## Claims

1. Apparatus for screwing and unscrewing large studs (3) or bolts, especially for securing the cover (1) of a container (2) provided with threaded receiving bores, said apparatus comprising :
— a system (12) for determining the optimum screwing in position for the stud (3) and for orienting said stud along a suitable trajectory,
— a system (13) for equalising the weight of the stud, controlled by oleo-hydraulic means (14, 15, 16, 17) by electrohydraulic force feedback control based on accurate measurement of the hydraulic pressure detected at the oleo-hydraulic means representing the compensating load to be applied by said oleo-hydraulic means,
— a drive mechanism (18, 24, 25) for rotationally driving the stud (3) at regulatable speed in both directions,
— means (21, 22) for gripping the stud (3), enabling an axial load to be applied to the stud,
— and a programmable robot (40) for controlling the apparatus, characterised in that the oleo-hydraulic means comprise, on the one hand, a casing (11) acted upon by the system (12) for determining the optimum screwing position and, on the other hand, by a jack (13) which limits the contact pressure of the stud (3) in the corresponding threaded bore, and comprising a hollow rod (14) which moves within said casing and which contains, integral therewith, the mechanism (18, 24, 25) for rotationally driving the stud (3) and the means (21, 22) for gripping said stud (3), said hollow rod (14) comprising on its periphery a piston (15) which defines two chambers (16, 17) with the casing (11), the movements of said hollow rod being controlled notably by the pressure difference prevailing in the chambers (16, 17) which are detected by differential sensors (a, b) arranged in each chamber or by a single differential pressure sensor (e).

2. Apparatus according to claim 1, characterised in that the mechanism for rotationally driving the stud (3) at regulatable speed is controlled by a variable-speed eddy current motor (24) which allows slipping and stoppage of the rotational driving of said stud (3) above a certain screwing torque threshold.

3. Apparatus according to claim 1, characterised in that the rotational drive mechanism for the stud consists of a hollow shaft (18) integrated in the rod (14) and moving axially at the same time as said rod and rotationally driven by the variable-speed motor (24) via a reducing gear (25) and a toothed wheel (27) meshing with a pinion (28) which is integral with said hollow shaft.

4. Apparatus according to claim 1, characterised in that the means for gripping the stud (3) consist of a spindle (21) integrally formed in the shaft (18) of the rotational drive mechanism for the stud, said spindle (21) moving axially at the same time as said shaft (18) and the rod (14) of the jack (13).

FIG.1

## FIG.2

FIG.3

FIG.4